# FASCICULE DE BREVET EUROPEEN

(11) **EP 2 990 292 B1**
(45) Date de publication et mention de la délivrance du brevet: **24.05.2017**
(21) Numéro de dépôt: 15178927.8
(22) Date de dépôt: 29.07.2015
(51) Int. Cl.: B61B 12/06

(54) **INSTALLATION ET PROCÉDÉ DE TRANSPORT PAR CÂBLE AÉRIEN**
ANLAGE UND VERFAHREN ZUM TRANSPORT ÜBER SEILBAHN
INSTALLATION AND METHOD FOR TRANSPORT BY OVERHEAD CABLE

(30) Priorité: 01.09.2014 FR 1458167
(43) Date de publication de la demande: 02.03.2016
(73) Titulaire: POMA, 38340 Voreppe (FR)
(72) Inventeur: BABAZ, Mathieu, 69009 Lyon (FR)
(74) Mandataire: Hecké, Gérard

(56) Documents cités:
- EP-A2- 1 837 264
- EP-A2- 2 101 237
- CA-A1- 2 645 389
- FR-A1- 2 969 566

## Description

### Domaine technique de l'invention

L'invention concerne le transport par câble aérien, en particulier le transport de personnes, notamment les téléphériques.

Le document EP-A2-1 837 264 décrit un dispositif conforme au préambule de la revendication 1.

### État de la technique

Actuellement, il existe différents types d'installation de transport par câble. Par exemple des installations qui utilisent un câble tracteur situé au niveau du sol, comme les funiculaires. D'autres installations utilisent un ou plusieurs câbles tracteurs aériens, tels que les téléphériques qui sont des installations de transport pour déplacer un ou plusieurs véhicules de voyageurs, appelés également cabines, bennes, sièges, etc. Certains téléphériques sont dits débrayables, c'est-à-dire que les véhicules destinés à être accouplés au câble tracteur aérien sont munis d'une pince débrayable qui permet de les désaccoupler du câble, en particulier lors de leur arrivée dans une gare de l'installation. Par ailleurs, ces téléphériques étant destinés à transporter des voyageurs, il est intéressant de fournir des moyens pour améliorer le confort des passagers durant leur transport. En particulier, lors d'un passage des véhicules sur un pylône, des à-coups peuvent apparaître, du fait notamment du changement de direction du câble qui modifie la tension exercée sur celui-ci, et peuvent gêner les voyageurs. En outre, ces installations sont consommatrices d'énergie électrique et il existe un besoin pour fournir des moyens pour économiser l'énergie électrique consommée par de telles installations.

### Objet de l'invention

Un objet de l'invention consiste à fournir des moyens pour améliorer le confort des passagers des véhicules lors de leur transport.

Un autre objet de l'invention est de diminuer la consommation d'énergie d'une installation de transport par câble.

Selon un aspect de l'invention, il est proposé une installation de transport par câble aérien, comprenant :
- au moins deux véhicules munis chacun d'une pince débrayable pour désaccoupler et accoupler le véhicule au câble aérien ;
- au moins un dispositif d'accouplement des véhicules au câble aérien ; et
- au moins un pylône de fléchissement du câble aérien.

L'installation comporte en outre :
- des moyens de détection d'un franchissement dudit pylône par un premier véhicule accouplé au câble aérien, les moyens de détection étant configurés pour émettre au moins un signal d'accouplement lorsque le franchissement est détecté ; et
- des moyens de commande dudit dispositif d'accouplement reliés aux moyens de détection et configurés pour commander un accouplement d'au mois un deuxième véhicule au câble aérien à la réception dudit signal d'accouplement.

Ainsi, on diminue les à-coups générés sur le câble qui apparaissent lorsqu'un véhicule en ligne franchit un pylône de fléchissement du câble aérien. Le pylône de fléchissement du câble aérien pouvant être un pylône de support pour fléchir le câble selon une direction descendante, ou un pylône de compression pour fléchir le câble selon une direction ascendante, ou encore un pylône support-compression qui agît comme un pylône de support ou un pylône de compression. En effet, lorsqu'un véhicule franchit un pylône, la tension globale générée sur le câble varie, ce qui entraîne un à-coup sur le câble. Afin de diminuer les à-coups, on accouple un ou plusieurs autres véhicules au câble aérien pour contrebalancer la variation de la tension globale sur le câble, soit en augmentant la tension lorsque celle-ci a tendance à diminuer, ou inversement. En accouplant au moins un véhicule en gare lorsqu'un autre véhicule accouplé au câble franchit un pylône, on lisse le couple fourni par le moteur d'entraînement afin de limiter les à-coups et diminuer l'énergie consommée par le moteur. On peut ainsi, diminuer les à-coups du moteur pour différentes configurations des installations de transport, notamment celles qui ont un seul pylône de support ou un seul pylône de compression. Avantageusement la puissance du moteur d'entraînement nécessaire est réduite. On peut donc envisager d'utiliser un moteur d'entraînement dont les dimensions sont plus faibles. Selon encore un autre avantage, l'effort de freinage du câble est réduit et on peut utiliser des freins pour le moteur d'entraînement et pour la poulie motrice moins puissants. Selon encore un autre avantage, la puissance du moteur d'entraînement nécessaire est réduite et on peut envisager d'utiliser une inertie d'arbre moteur plus faible.

Les moyens de détection peuvent comporter un capteur de position configuré pour détecter le franchissement dudit pylône par le premier véhicule accouplé au câble aérien, et pour émettre un signal d'accouplement aux moyens de commande lorsque le franchissement dudit pylône est détecté.

Les moyens de détection peuvent en outre comporter un bloc de calcul configuré pour calculer un temps où le premier véhicule franchira ledit pylône et pour émettre un signal d'accouplement aux moyens de commande lorsque le temps calculé est atteint.

L'installation peut comprendre un moteur d'entraînement du câble aérien, et les moyens de détection peuvent comporter un module pour déterminer un couple fourni par le moteur d'entraînement et pour émettre un signal d'accouplement aux moyens de commande lorsqu'une valeur absolue de la vitesse de variation du couple fourni par le moteur d'entraînement est supérieure à un seuil déterminé.

En particulier, lorsqu'un véhicule est tracté d'un point aval à un point amont, puis lorsque le véhicule franchit un pylône de support, il est alors tracté d'un point amont vers un point aval, et le véhicule favorise l'entraînement du câble, ce qui entraîne un à-coup du moteur. Lors du franchissement du pylône de support par le véhicule, la vitesse de diminution du couple devient supérieure à un seuil déterminé, et on accouple un autre véhicule pour augmenter à nouveau le couple moteur, et ainsi lisser le couple fourni par le moteur d'entraînement du câble. Grâce à un accouplement maîtrisé des véhicules en gare, on peut lisser le couple moteur fourni par le moteur, ce qui améliore le confort des passagers et diminue la consommation d'énergie du moteur d'entraînement de la poulie motrice. On entend par vitesse de variation, la valeur absolue de la variation, soit en augmentation, soit en diminution, du couple moteur fourni par le moteur d'entraînement divisée par une durée.

Le module peut comprendre des moyens de mesure d'un courant consommé par le moteur d'entraînement et détermine le couple fourni par le moteur d'entraînement à partir du courant consommé mesuré.

Ledit pylône peut être un pylône de support pour fléchir le câble aérien selon une direction descendante et les moyens de détection peuvent émettre le signal d'accouplement aux moyens de commande lorsqu'une vitesse de diminution du couple fourni par le moteur d'entraînement est supérieure au seuil déterminé.

L'installation peut comprendre au moins un pylône de compression pour fléchir le câble selon une direction ascendante, et les moyens de détection émettent le signal d'accouplement aux moyens de commande lorsqu'une vitesse d'augmentation du couple fourni par le moteur d'entraînement est supérieure au seuil déterminé.

Lorsque l'installation comporte un pylône de compression, un véhicule est tracté d'un point amont à un point aval, puis, lorsque le véhicule franchit le pylône de compression, il est alors tracté d'un point aval vers un point amont, et le véhicule freine l'entraînement du câble, ce qui entraîne un à-coup du moteur. Lors du franchissement du pylône par le véhicule, le couple augmente et en particulier la vitesse d'augmentation du couple est supérieure au seuil déterminé, et on accouple un autre véhicule pour diminuer à nouveau le couple moteur, et lisser le couple fourni par le moteur d'entraînement du câble.

Pour le cas d'un pylône support-compression, on se reportera au cas d'un pylône de support si le véhicule est tracté de l'aval vers l'amont avant le passage sur le pylône, puis de l'amont vers l'aval après ce passage. On se reportera au cas d'un pylône de compression si le véhicule est tracté de l'amont vers l'aval avant le passage sur le pylône, puis de l'aval vers l'amont après ce passage.

Les moyens de commande peuvent commander ledit dispositif d'accouplement pour accoupler les véhicules avec une fréquence d'accouplement variable.

Une telle installation est particulièrement adaptée pour accoupler les véhicules en fonction des besoins, et plus particulièrement lorsque les vitesses de variation du couple fourni par le moteur dépassent le seuil déterminé à une fréquence variable.

L'installation peut comprendre au moins deux gares munies chacune d'un dispositif d'accouplement des véhicules au câble aérien, et les moyens de commande commandent le dispositif d'accouplement d'une gare pour accoupler les véhicules au câble aérien à une fréquence d'accouplement différente de celle du dispositif d'accouplement d'au moins une autre gare.

Ainsi, on maîtrise les à-coups engendrés sur le câble en synchronisant le cadencement d'accouplement des véhicules avec le franchissement des pylônes, ce qui n'est pas le cas des installations qui ont un cadencement identique entre les différentes gares et ne permettent pas de diminuer les à-coups engendrés sur le câble.

Selon un autre aspect de l'invention, il est proposé un procédé de transport par câble aérien d'au moins deux véhicules munis chacun d'une pince débrayable pour être désaccouplé et accouplé au câble aérien, le câble aérien étant fléchi par au moins un pylône.

Le procédé comporte les étapes suivantes :
- détecter un franchissement dudit pylône par un premier véhicule accouplé au câble aérien ; et
- accoupler au moins un deuxième véhicule au câble aérien lorsque le franchissement est détecté.

L'étape de détection peut comporter un calcul d'un temps où le premier véhicule franchira ledit pylône, et l'étape d'accouplement comporte un accouplement d'au moins un deuxième véhicule au câble aérien lorsque le temps calculé est atteint.

Le câble aérien peut être entraîné par un moteur, l'étape de détection comporte une détermination d'un couple fourni par le moteur et l'étape d'accouplement comporte un accouplement d'au moins un deuxième véhicule au câble aérien lorsqu'une valeur absolue de la vitesse de variation du couple fourni par le moteur est supérieure à un seuil déterminé.

Le câble aérien peut être fléchi selon une direction descendante par au moins un pylône de support, et l'étape d'accouplement peut comporter un accouplement d'au moins un deuxième véhicule au câble aérien lorsqu'une vitesse de diminution du couple fourni par le moteur est supérieure au seuil déterminé.

Le câble aérien peut être fléchi selon une direction ascendante par au moins un pylône de compression, et l'étape d'accouplement comporte un accouplement d'au moins un deuxième véhicule au câble aérien lorsqu'une vitesse d'augmentation du couple fourni par le moteur est supérieure au seuil déterminé.

L'étape d'accouplement peut également comporter un accouplement des véhicules avec une fréquence d'accouplement variable.

Le procédé peut comprendre au moins deux gares configurées pour accoupler les véhicules au câble aérien, et l'étape d'accouplement peut comporter un accouplement des véhicules dans au moins une gare à une fréquence d'accouplement différente de celle d'au moins une autre gare.

### Description sommaire du dessin

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement un mode de réalisation d'une installation de transport par câble selon l'invention ;
- la figure 2, illustre de façon schématique des courbes du couple fourni par un moteur d'entraînement du câble en fonction du temps ; et
- les figures 3 à 5, illustrent schématiquement d'autres modes de réalisation d'une installation de transport par câble.

### Description détaillée

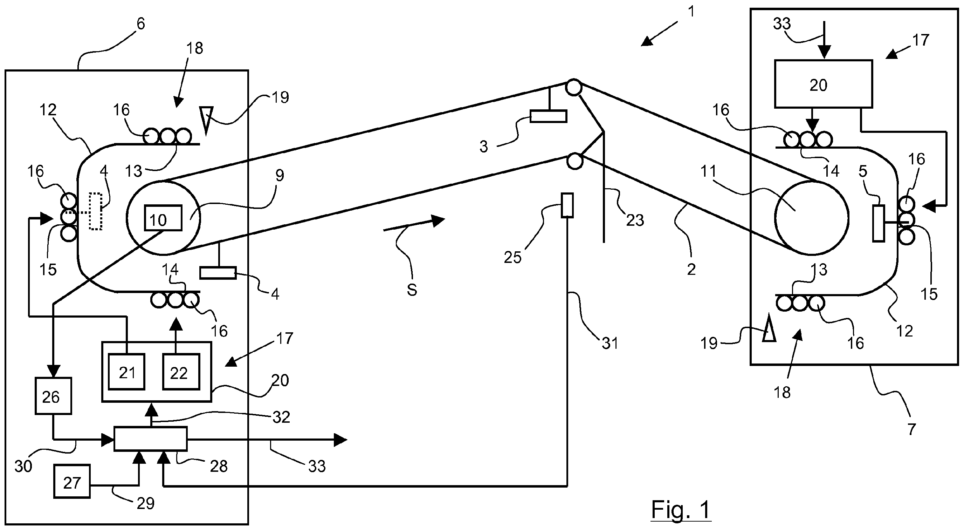

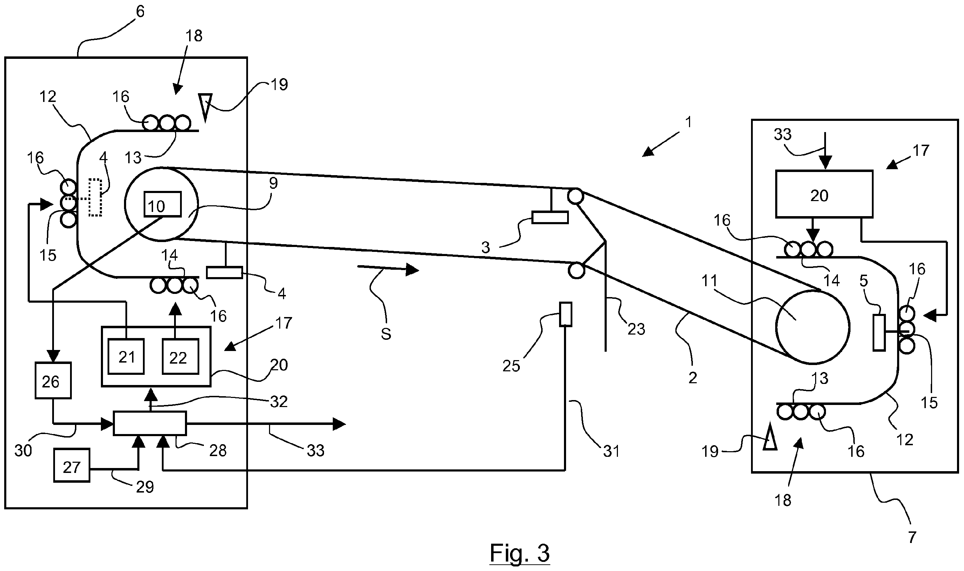

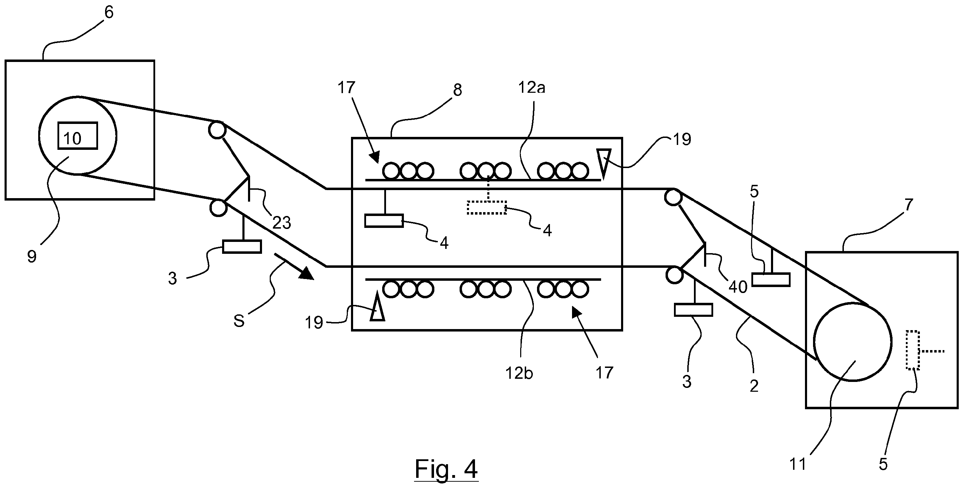

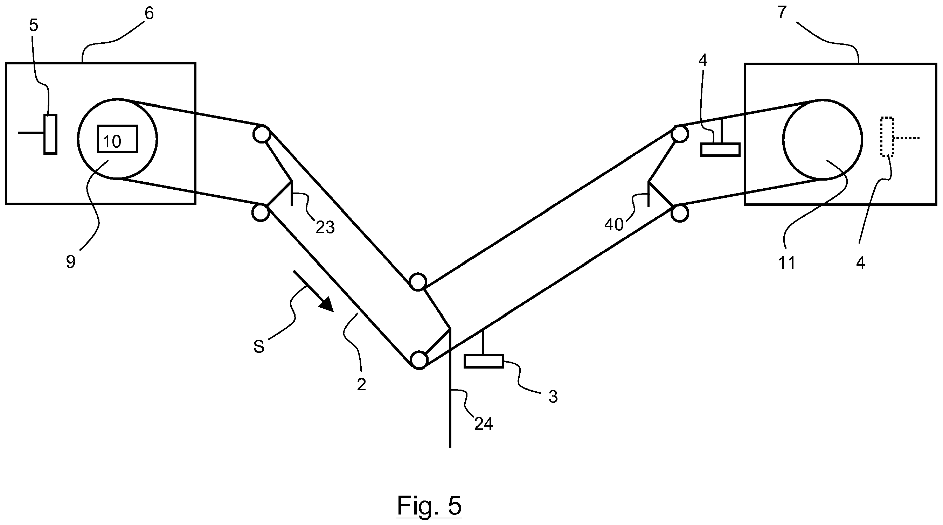

Sur la figure 1, on a représenté une installation de transport 1 par câble aérien 2, comprenant au moins deux véhicules 3 à 5. Dans l'exemple illustré à la figure 1, l'installation comporte trois véhicules 3 à 5. Les véhicules 3 à 5 sont configurés pour être accouplés au câble 2 et tractés par ce dernier. L'installation de transport 1 est de façon générale un téléphérique. Plus particulièrement, l'installation 1 peut être une télécabine, et dans ce cas les véhicules sont fermés, ou un télésiège où les véhicules sont ouverts. L'installation 1 comporte au moins deux gares 6, 7, dites gares d'extrémité, pour l'embarquement et le débarquement des personnes. Dans les exemples illustrés aux figures 1 et 5, l'installation 1 comprend deux gares d'extrémité 6, 7 situées au même niveau, c'est-à-dire sur une même ligne horizontale. En variante, une première gare d'extrémité 6 est située en amont, et elle est appelée gare amont, et une deuxième gare d'extrémité 7 est située en aval, et elle est appelée gare aval, comme illustré sur les figures 3 et 4. En outre, l'installation de transport 1 peut comprendre une ou plusieurs gares intermédiaires 8, situées entre les deux gares d'extrémité 6, 7, comme illustré sur la figure 4. De façon générale, l'installation de transport 1 est dite débrayable, c'est-à-dire que les véhicules 3 à 5 comportent chacun une pince débrayable pour pouvoir accoupler et désaccoupler le véhicule 3 à 5 au câble aérien 2. L'installation 1 peut en outre comprendre d'autres câbles, dits porteurs, pour suspendre les véhicules 3 à 5 au-dessus du sol. L'installation 1 peut également comprendre d'autres câbles tracteurs, lorsque les véhicules sont importants et lourds. Ces différents câbles n'ont pas été représentés sur les figures à des fins de simplification. En tout état de cause, l'installation 1 comporte au moins un câble tracteur 2, qui peut être porteur ou non, pour déplacer par traction les véhicules 3 à 5 d'une gare 6 à l'autre 7, 8, et inversement. Le câble tracteur 2 est un câble continu en boucle fermée, il est entraîné par une poulie motrice 9, elle-même entraînée par un moteur 10 d'une des gares d'extrémité 6, appelée également gare motrice 6. L'autre gare d'extrémité 7 comporte, quant à elle, une poulie 11 non motorisée, appelée poulie de renvoi, pour mettre en tension le câble tracteur 2 entre les gares d'extrémité 6, 7.

En outre, lorsqu'un véhicule 3 à 5 quitte une gare 6 à 8, il est accouplé au câble 2 qui le mène jusqu'à une autre gare, d'extrémité 6, 7 ou intermédiaire 8. Dans ce cas, la pince débrayable est fermée et le véhicule est solidaire du câble 2, c'est-à-dire qu'il est relié mécaniquement en permanence sur le câble 2. Entre deux gares, les véhicules cheminent le long d'une voie de circulation définie par le câble tracteur 2, on dit également que les véhicules sont en ligne. Lorsqu'un véhicule 3 à 5 arrive dans une gare 6 à 8, la pince du véhicule s'ouvre et le véhicule 3 à 5 est désaccouplé du câble tracteur 2. Le véhicule désaccouplé peut être arrêté, ou peut cheminer sur un circuit de transfert 12 d'une gare 6 à 8 à une vitesse plus lente que celle du câble tracteur 2. Chaque circuit de transfert 12 comporte un tronçon de freinage 13, un tronçon d'accélération 14 et un tronçon intermédiaire 15 qui relie les précédents tronçons 13, 14. Plus particulièrement, chaque gare d'extrémité 6, 7 comporte un seul circuit de transfert 12, et les gares intermédiaires 8 peuvent comporter deux circuits de transfert 12a, 12b. Chaque tronçon 13 à 15 comporte un train de roues 16 à bandage pneumatique réparties le long du tronçon 13 à 15. Les roues 16 coopèrent par friction avec des plaques de friction fixées aux pinces des véhicules 3 à 5, pour déplacer les véhicules désaccouplés dans le circuit de transfert 12 de chacune des gares 6 à 8.

Chaque gare 6 à 8 comporte un dispositif d'accouplement 17 pour accoupler un véhicule au câble aérien 2 et un dispositif de désaccouplement 18 pour désaccoupler un véhicule. Le dispositif de désaccouplement 18 comporte le tronçon de freinage 13, et un mécanisme d'ouverture de pince 19 pour ouvrir la pince du véhicule qui entre en gare, ce qui le désaccouple du câble 2. Le mécanisme d'ouverture 19 est situé à l'entrée du tronçon de freinage 13, c'est-à-dire à l'endroit où les véhicules entrent en gare. Le mécanisme d'ouverture 19 comporte un rail pour permettre de comprimer un ressort de la pince de manière à l'ouvrir, et pour maintenir la pince ouverte pendant le cheminement du véhicule dans le circuit de transfert 12, 12a, 12b. Puis le véhicule arrive dans le tronçon intermédiaire 15 dans lequel il est arrêté, ou éventuellement déplacé à faible vitesse, en l'occurrence à une vitesse inférieure à celle qu'il avait dans le tronçon de freinage 13.

Par ailleurs, chaque dispositif d'accouplement 17 comporte le tronçon intermédiaire 15, le tronçon d'accélération 14, et un dispositif lanceur 20. Le dispositif lanceur 20 comporte un moteur lanceur 21, et un moteur d'accélération 22. Le moteur lanceur 21 entraîne le train de roues 16 du tronçon intermédiaire 15 pour déplacer les véhicules désaccouplés depuis le tronçon intermédiaire 15 vers le tronçon d'accélération 14. Par exemple, le moteur lanceur 21 entraîne une courroie d'entraînement des roues 16 du tronçon intermédiaire 15. En variante, le moteur lanceur 21 entraîne une chaîne à taquets pour prendre appui contre les véhicules et les pousser d'un emplacement à l'autre. Le moteur d'accélération 22 permet, quant à lui, d'accélérer les véhicules désaccouplés le long du tronçon d'accélération 14, à une vitesse égale à celle du câble de traction 2 afin d'accoupler le véhicule sans à-coups. Par exemple, le moteur d'accélération 22 entraîne, par l'intermédiaire d'une courroie, les roues 16 du tronçon d'accélération 14 pour accélérer les véhicules désaccouplés. Lorsque les véhicules quittent le tronçon d'accélération 14, la pince sort du rail et le ressort se comprime à nouveau pour fermer la pince sur le câble tracteur 2, et ainsi accouple le véhicule au câble 2. Les moteurs lanceur et d'accélération 21, 22 peuvent être à vitesse variable ou à vitesse constante. De préférence, les moteurs 21, 22 sont à vitesse constante.

L'installation 1 comporte également au moins un pylône de support 23 du câble aérien 2. En d'autres termes, les pylônes de support 23 fléchissent le câble aérien 2 en direction du sol, par exemple pour que le câble aérien 2 suive le relief du sol. C'est-à-dire que les pylônes de support 23 fléchissent le câble aérien 2 selon une direction descendante. En général, les pylônes de support 23 sont situés entre deux gares 6 à 8. L'installation 1 peut en outre comprendre au moins un pylône de compression 24 pour fléchir le câble 2 selon une direction ascendante, comme illustré à la figure 5. En variante, l'installation 1 peut comprendre un ou plusieurs pylônes de support-compression.

L'installation 1 comporte en outre, des moyens de détection 25 à 27 d'un franchissement d'un pylône, de support 23, et/ou de compression 24, et/ou de support-compression (non représenté à des fins de simplification), par un véhicule accouplé au câble aérien 2, et des moyens de commande 28 configurés pour commander les dispositifs d'accouplement 17 des gares 6 à 8.

Les moyens de détection 25 à 27 sont configurés pour émettre au moins un signal d'accouplement en direction des moyens de commande 28, par l'intermédiaire des connexions 29 à 31, qui peuvent être filaires ou non, par exemple par ondes radio. Un signal d'accouplement est émis par les moyens de détection 25, 26 lorsqu'un franchissement d'un pylône 23, 24 de l'installation 1 par un véhicule accouplé au câble aérien 2 est détecté. Par exemple, les moyens de détection comportent un capteur de position 25 configuré pour détecter un franchissement d'un pylône 23, 24 par un véhicule accouplé au câble aérien 2. Le capteur de position 25 émet un signal d'accouplement aux moyens de commande 28, par l'intermédiaire de la connexion 31, lorsque le franchissement du pylône est détecté. De préférence, chaque pylône 23, 24 de l'installation est équipé d'un capteur de position 25. Les capteurs de position 25 sont par exemple fixés sur leurs pylônes 23, 24 respectifs. Selon une variante, les moyens de détection comportent un module 26 configuré pour déterminer un couple fourni par le moteur d'entraînement 10. Par ailleurs, le module 26 émet un signal d'accouplement aux moyens de commande 28, par l'intermédiaire de la connexion 30, lorsqu'une valeur absolue d'une vitesse de variation du couple fourni par le moteur d'entraînement 10 est supérieure à un seuil déterminé. Le seuil déterminé dépend de la configuration de l'installation 1. Par exemple, le seuil déterminé est supérieur aux vitesses de variation du couple moteur lorsqu'un ou plusieurs véhicules sont tractés entre une gare et un pylône, ou entre deux pylônes, et selon une direction ascendante ou descendante. La détection d'une vitesse de variation du couple fourni par le moteur d'entraînement 10, lorsqu'elle est supérieure au seuil déterminé, correspond à un franchissement d'un pylône par un véhicule. En effet, lorsqu'un véhicule franchit un pylône de support 23, le véhicule va passer d'un point amont (le sommet du pylône) vers un point aval (une position située après le pylône dans le sens de traction du câble 2), ce qui fournit de l'énergie au moteur d'entraînement 10 car le véhicule favorise l'entraînement du câble. Plus particulièrement, avant de franchir le pylône de support 23, le moteur d'entraînement augmente le couple fourni avec une vitesse de variation inférieure au seuil déterminé, afin d'amener le véhicule depuis un point aval jusqu'au sommet du pylône de support 23. Puis, lorsque le véhicule franchit le pylône, le couple diminue et après franchissement, le couple diminue encore de sorte que la vitesse de diminution du couple fourni est supérieure au seuil déterminé. En tout état de cause, le couple moteur diminue lors d'un franchissement d'un pylône de support 23 dans le cas où le véhicule accouplé au câble s'éloigne ou s'approche de la gare motrice 6. Ainsi, lorsqu'on détecte un franchissement d'un pylône de support 23, on accouple un véhicule qui va être tracté en direction du pylône de support 23 et qui va freiner l'entraînement du câble, ce qui limite les à-coups et diminue la consommation d'énergie du moteur 10.

En outre, lorsqu'un véhicule franchit un pylône de compression 24, le véhicule va passer d'un point aval (le sommet du pylône) vers un point amont (une position située après le pylône dans le sens de traction du câble 2), et le moteur d'entraînement 10 doit augmenter le couple fourni pour monter le véhicule jusqu'au point amont, car le véhicule freine l'entraînement du câble. Plus particulièrement, avant de franchir le pylône de compression 24, le couple fourni par le moteur 10 augmente avec une vitesse de variation inférieure au seuil déterminé, afin d'amener le véhicule depuis un point amont jusqu'au pylône de compression 24. Puis, lorsque le véhicule franchit le pylône 24, le couple augmente et après franchissement, le couple augmente encore de sorte que la vitesse d'augmentation du couple fourni est supérieure au seuil déterminé. En tout état de cause, le couple moteur augmente lors d'un franchissement d'un pylône de compression 24 dans le cas où le véhicule accouplé au câble s'éloigne ou s'approche de la gare motrice 6.

Afin de déterminer les vitesses de variation du couple moteur, le module 26 peut déterminer la puissance consommée par le moteur, ou la vitesse du câble, ou encore le courant consommé par le moteur 10. En particulier, le courant consommé par le moteur 10 est l'image du couple fourni. De préférence, le module 26 comporte des moyens de mesure du courant consommé par le moteur d'entraînement 10 et détermine le couple fourni par le moteur d'entraînement 10 à partir du courant consommé mesuré.

Selon encore une variante, les moyens de détection comportent un bloc de calcul 27 configuré pour calculer un temps où un véhicule franchira un pylône 23, 24. Par ailleurs, le bloc de calcul 27 émet un signal d'accouplement aux moyens de commande 28, par l'intermédiaire de la connexion 29, lorsque le temps calculé est atteint. Par exemple, le bloc de calcul 27 comporte des capteurs de position situés sur les dispositifs d'accouplement 17 pour détecter un accouplement d'un véhicule au câble aérien 2. En outre le bloc de calcul 27 mesure un temps de passage lorsqu'un véhicule est accouplé au câble aérien 2, mesure la vitesse de rotation de la poulie motrice au cours du temps, puis calcule le temps où le véhicule accouplé franchira un pylône à partir de la vitesse et du temps de passage mesurés, et des distances entre les pylônes et les dispositifs d'accouplement 17. Les distances sont des données préalablement enregistrées dans une mémoire non volatile du bloc de calcul 27.

Les moyens de détection 25 à 27 peuvent comprendre en combinaison des capteurs de position 25, un module 26 et un bloc de calcul 27.

Les moyens de commande 28 sont reliés aux moyens de détection, par les connexions 29 à 31, et sont configurés pour commander un accouplement d'un véhicule au câble aérien 2 à la réception d'au moins un signal d'accouplement provenant, soit d'un capteur de position 25, soit du module 26, soit du bloc de calcul 27, ou des trois. La redondance des signaux d'accouplement permet de pallier une défaillance du capteur 25 ou du module 26 ou du bloc de calcul 27. Par exemple les moyens de commande 28 peuvent être configurés pour déclencher un accouplement s'ils reçoivent au moins un signal d'accouplement. De préférence, les moyens de commande 28 sont configurés pour déclencher un accouplement s'ils reçoivent au moins le signal d'accouplement provenant du bloc de calcul 27. Les moyens de commande 28 peuvent être une unité de commande électronique. De façon générale, les moyens de commande 28 commandent un dispositif d'accouplement lorsqu'un véhicule franchit un pylône, en d'autres termes lorsque les moyens de commande 28 reçoivent un signal d'accouplement provenant du module 26, ou d'un capteur de position 25, ou du bloc de calcul 27, ou des trois à la fois. Les moyens de commande 28 sont reliés aux dispositifs d'accouplement 17 des gares par des connexions 32, filaires ou non, par exemple par ondes radio. Plus particulièrement, les moyens de commande 28 commandent les moteurs lanceur 21 et d'accélération 22. Lorsque les moyens de commande 28 reçoivent un signal d'accouplement, ils commandent un dispositif d'accouplement 17 d'au moins une gare 6 à 8 pour accoupler un véhicule débrayé au câble aérien 2. En outre, les moyens de commande 28 commandent le moteur lanceur 21 pour amener un véhicule débrayé depuis le tronçon intermédiaire 15 vers le tronçon d'accélération 14. Puis le moteur d'accélération 22, qui peut entraîner les roues 16 du tronçon d'accélération en permanence, accélère le véhicule pour l'accoupler au câble 2.

Le principe général de fonctionnement de l'installation 1 est de détecter un franchissement d'un pylône par un premier véhicule accouplé au câble, et d'accoupler au moins un deuxième véhicule au câble aérien lorsque le franchissement du pylône par le premier véhicule est détecté. Sur la figure 1, dans un état initial, le premier véhicule 3 franchit le pylône de support 23, le deuxième véhicule 4 est accouplé au câble 2, et le troisième véhicule 5 est arrêté dans la gare d'extrémité 7. Lorsque le deuxième véhicule 4 est accouplé au câble aérien 2, il quitte sa position arrêté dans le tronçon intermédiaire 15, représentée en pointillé, passe dans le tronçon d'accélération 14 puis est accouplé au câble 2. Puis, le câble aérien 2 est entraîné selon le sens S en direction de l'autre gare d'extrémité 7. Dans ce cas, le premier véhicule 3 est tracté en direction de la gare motrice 6, et descend depuis le sommet du pylône de support 23 vers la gare motrice 6. Le deuxième véhicule 4 est tracté en direction du sommet du pylône de support 23. Ensuite, le premier véhicule 3 est débrayé et s'arrête dans le tronçon intermédiaire 15 de la gare motrice 6, et le deuxième véhicule 4 franchit le pylône de support 23 en direction de l'autre gare d'extrémité 7. Les moyens de détection 25 à 27 émettent un signal d'accouplement aux moyens de commande 28, signalant un franchissement du pylône de support 23 par le deuxième véhicule 4, et les moyens de commande 28 commandent le dispositif d'accouplement de la gare d'extrémité 7 pour accoupler le troisième véhicule 5 au câble aérien 2. En fin de cycle, le deuxième véhicule 4 entre dans la gare d'extrémité 7 où il est débrayé pour s'arrêter dans le tronçon intermédiaire 15 de la gare 7. Par ailleurs, le troisième véhicule 5 franchit le pylône de support 23 en direction de la gare motrice 6, et un nouveau signal de franchissement est émis par les moyens de détection 25, 26, et les moyens de commande 28 commandent le dispositif d'accouplement 17 de la gare motrice 6 pour accoupler le premier véhicule 3 au câble aérien.

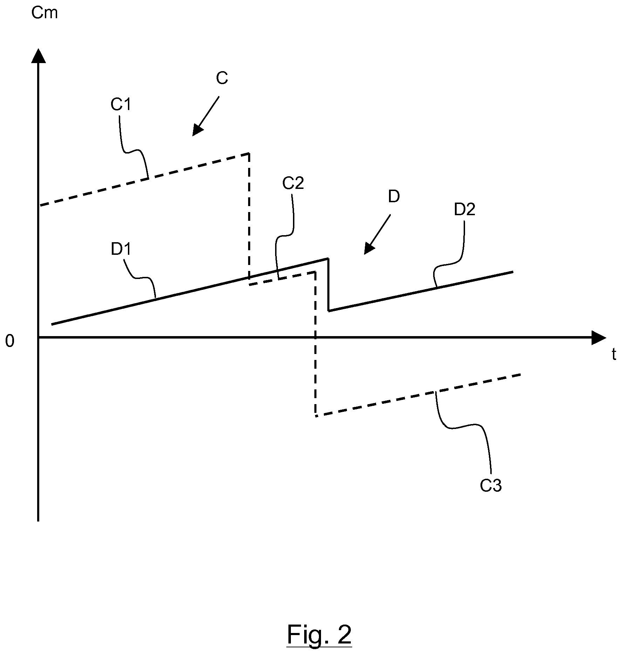

Sur la figure 2, on a représenté une première courbe C, en pointillé, qui correspond au couple fourni Cm par le moteur d'entraînement 10 en fonction du temps t, dans le cas où on accouple deux véhicules dans l'installation 1 décrite à la figure 1 d'une manière classique de l'art antérieur. La manière classique de l'art antérieur consiste à accoupler les véhicules en respectant un intervalle de temps constant entre l'accouplement de deux véhicules consécutifs dans chacune des gares, pour conserver une distance constante entre les véhicules accouplés au câble. Dans un premier temps, illustré par une première partie C1 de la première courbe C, on accouple les deux véhicules en même temps dans respectivement les deux gares d'extrémité 6, 7. Puis, les véhicules sont tractés en même temps en direction du sommet du pylône de support, et le couple moteur augmente. Dans un deuxième temps, illustré par une deuxième partie C2 de la première courbe C, un premier véhicule accouplé au câble franchit le pylône, et le couple diminue brutalement en générant un à-coup, puis augmente à nouveau du fait de la traction du deuxième véhicule vers le sommet du pylône. Dans un troisième temps, illustré par une troisième partie C3 de la première courbe C, le deuxième véhicule franchit le pylône, le couple diminue encore brutalement générant un à-coup, et devient négatif du fait que les deux véhicules descendent vers les deux gares d'extrémité 6, 7 respectivement, et favorisent mutuellement l'entraînement du câble aérien.

Au contraire, selon l'invention, le couple fourni par le moteur d'entraînement est lissé. On a représenté une deuxième courbe D, en trait plein, correspondant au couple fourni Cm par le moteur d'entraînement 10 en fonction du temps t, dans le cas où on accouple trois véhicules dans l'installation 1 décrite à la figure 1 selon l'invention. Selon l'invention, l'intervalle de temps constant entre l'accouplement de deux véhicules consécutifs dans chacune des gares n'est pas nécessairement respecté. En outre, l'invention consiste à accoupler les véhicules pour limiter les à-coups du moteur d'entraînement 10. Dans un premier temps, illustré par une première partie D1 de la deuxième courbe D, un premier véhicule accouplé au câble franchit un pylône, donc on accouple un deuxième véhicule dans une première gare d'extrémité 6. Puis, le premier véhicule est tracté vers la gare d'extrémité 6 et le deuxième véhicule est tracté en direction du sommet du pylône, et le couple moteur augmente. En particulier, la vitesse de variation du couple est inférieure à un seuil déterminé. Dans un deuxième temps, illustré par une deuxième partie D2 de la deuxième courbe D, le deuxième véhicule accouplé au câble franchit le pylône, et le couple diminue brutalement générant un nouvel à-coup. En particulier, la vitesse de variation du couple est supérieure au seuil déterminé. Dans le deuxième temps, on accouple le troisième véhicule dans l'une des gares, de préférence l'autre gare d'extrémité 7, et le couple augmente alors pour tracter le troisième véhicule vers le sommet du pylône. On peut continuer à lisser le couple moteur en accouplant un quatrième véhicule lorsque le troisième véhicule franchit le pylône de support. Grâce à l'invention, on lisse le couple fourni par le moteur d'entraînement, et on limite donc les à-coups.

Les installations de transport 1 peuvent avoir des configurations différentes. Elles peuvent comprendre un ou plusieurs pylônes, un nombre pair ou impair de véhicules, des gares amont et aval, ou des gares situées au même niveau, et la gare motrice peut être amont ou aval. Par exemple, afin de limiter les à-coups, le dispositif d'accouplement 17 d'une gare 6 à 8 accouple les véhicules à une fréquence d'accouplement différente de celle du dispositif d'accouplement 17 d'au moins une autre gare 6 à 8. En effet, dans l'état de la technique, on souhaite conserver une distance identique entre les véhicules en ligne, et dans ce cas la fréquence d'accrochage des véhicules débrayés doit être identique dans chacune des gares. Dans l'état de la technique, on ne maîtrise pas les à-coups sur la poulie motrice, et le couple moteur fourni n'est pas non plus maîtrisé. Au contraire, selon l'invention, en accouplant les véhicules avec une fréquence d'accouplement différente selon les gares, on peut adapter la tension générée sur le câble, et donc le couple fourni par le moteur d'entraînement, en fonction des besoins, et notamment, on accouple les véhicules avec une fréquence d'accouplement qui est déterminée à partir des vitesses de variation du couple moteur.

Sur la figure 3, on a représenté un autre mode de réalisation de l'invention, dans lequel la gare motrice 6 est située à un niveau plus élevé que l'autre gare d'extrémité 7, et le sommet du pylône de support 23 est situé à un niveau plus élevé que la gare motrice 6. On a également reporté sur la figure 3 les références des mêmes éléments décrits précédemment à la figure 1. La gare motrice 6 est alors une gare amont. Le principe d'accouplement reste identique à celui décrit à la figure 1.

Sur la figure 4, on a représenté encore un autre mode de réalisation de l'invention, dans lequel l'installation 1 comprend une gare motrice amont 6, une gare d'extrémité aval 7 et une gare intermédiaire 8 située entre les deux gares d'extrémité 6, 7. On a également reporté sur la figure 4 les références des mêmes éléments décrits précédemment à la figure 1. En outre, l'installation 1 comprend un premier pylône de support 23 situé entre la gare amont 6 et la gare intermédiaire 8 et dont le sommet est situé à un niveau plus élevé que la gare amont 6, et un deuxième pylône de support 40 situé entre la gare intermédiaire 8 et la gare aval 7 et dont le sommet est situé à un niveau plus élevé que la gare intermédiaire 8. Dans ce mode de réalisation, lorsqu'un premier véhicule 3 franchit le premier pylône de support 23, on accouple un deuxième véhicule 4 dans la gare intermédiaire 8 en direction de la gare amont 6. Puis, lorsque le premier véhicule 3 franchit le deuxième pylône de support 40, on accouple un troisième véhicule 5 dans la gare aval 7.

Sur la figure 5, on a encore illustré un autre mode de réalisation de l'invention, dans lequel l'installation comprend deux gares d'extrémité 6, 7 situées au même niveau. On a également reporté sur la figure 5 les références des mêmes éléments décrits précédemment à la figure 1. En outre, l'installation comprend deux pylônes de support 23, 40 et un troisième pylône de compression 24 situé entre les deux premiers pylônes 23, 40. Dans ce cas, lorsqu'un premier véhicule 3 franchit le troisième pylône, on accouple un deuxième véhicule 4 dans la gare d'extrémité 7, située à droite sur la figure 5. En variante, on pourrait accoupler un deuxième véhicule dans la gare motrice 6. Selon encore une autre variante, on peut accoupler un deuxième et un troisième véhicule simultanément dans respectivement les deux gares d'extrémité 6, 7.

En outre, un procédé de transport par câble peut être mis en oeuvre par l'installation de transport 1 décrite ci-avant.

L'invention ainsi décrite permet d'améliorer le confort des passagers en limitant les à-coups générés sur le câble aérien de l'installation. L'invention permet en outre de diminuer les consommations d'énergie du moteur d'entraînement du câble aérien.

## Revendications

1. Installation de transport par câble aérien (2), comprenant :
- au moins deux véhicules (3 à 5) munis chacun d'une pince débrayable pour désaccoupler et accoupler le véhicule au câble aérien (2) ;
- au moins un dispositif d'accouplement (17) des véhicules (3 à 5) au câble aérien (2) ; et
- au moins un pylône de fléchissement (23, 24, 40) du câble aérien (2),
**caractérisée en ce qu'**elle comporte :
- des moyens de détection (25 à 27) d'un franchissement dudit pylône (23, 24, 40) par un premier véhicule accouplé au câble aérien (2), les moyens de détection (25 à 27) étant configurés pour émettre au moins un signal d'accouplement lorsque le franchissement est détecté ; et
- des moyens de commande (28) dudit dispositif d'accouplement (17) reliés aux moyens de détection (25 à 27) et configurés pour commander un accouplement d'au moins un deuxième véhicule au câble aérien (2) à la réception dudit signal d'accouplement.

2. Installation selon la revendication 1, dans laquelle les moyens de détection (25 à 27) comportent un capteur de position (25) configuré pour détecter le franchissement dudit pylône (23, 24, 40) par le premier véhicule accouplé au câble aérien (2), et pour émettre un signal d'accouplement aux moyens de commande (28) lorsque le franchissement dudit pylône (23, 24, 40) est détecté.

3. Installation selon la revendication 1 ou 2, dans laquelle les moyens de détection (25 à 27) comportent un bloc de calcul (27) configuré pour calculer un temps où le premier véhicule franchira ledit pylône (23, 24, 40) et pour émettre un signal d'accouplement aux moyens de commande (28) lorsque le temps calculé est atteint.

4. Installation selon la revendication 1 ou 2, comprenant un moteur d'entraînement (10) du câble aérien (2), et dans laquelle les moyens de détection (25 à 27) comportent un module (26) pour déterminer un couple fourni par le moteur d'entraînement (10) et pour émettre un signal d'accouplement aux moyens de commande (28) lorsqu'une valeur absolue de la vitesse de variation du couple fourni par le moteur d'entraînement (10) est supérieure à un seuil déterminé.

5. Installation selon la revendication 4, dans laquelle le module (26) comprend des moyens de mesure d'un courant consommé par le moteur d'entraînement (10) et détermine le couple fourni par le moteur d'entraînement (10) à partir du courant consommé mesuré.

6. Installation selon la revendication 4, dans laquelle ledit pylône est un pylône de support (23, 40) pour fléchir le câble aérien (2) selon une direction descendante et les moyens de détection (25 à 27) émettent le signal d'accouplement aux moyens de commande (28) lorsqu'une vitesse de diminution du couple fourni par le moteur d'entraînement (10) est supérieure au seuil déterminé.

7. Installation selon la revendication 3 à 5, comprenant au moins un pylône de compression (24) pour fléchir le câble selon une direction ascendante, et dans laquelle les moyens de détection (25 à 27) émettent le signal d'accouplement aux moyens de commande (28) lorsqu'une vitesse d'augmentation du couple fourni par le moteur d'entraînement (10) est supérieure au seuil déterminé.

8. Installation selon l'une des revendications 1 à 6, dans laquelle les moyens de commande (28) commandent ledit dispositif d'accouplement (17) pour accoupler les véhicules (3 à 5) avec une fréquence d'accouplement variable.

9. Installation selon l'une des revendications 1 à 7, comprenant au moins deux gares (6 à 8) munies chacune d'un dispositif d'accouplement (17) des véhicules (3 à 5) au câble aérien (2), et dans laquelle les moyens de commande (28) commandent le dispositif d'accouplement (17) d'une gare (6 à 8) pour accoupler les véhicules (3 à 5) au câble aérien (2) à une fréquence d'accouplement différente de celle du dispositif d'accouplement (17) d'au moins une autre gare (6 à 8).

10. Procédé de transport par câble aérien (2) d'au moins deux véhicules (3 à 5) munis chacun d'une pince débrayable pour être désaccouplé et accouplé au câble aérien (2), le câble aérien (2) étant fléchi par au moins un pylône (23, 24, 40), **caractérisé en ce qu'**il comporte les étapes suivantes :
- détecter un franchissement dudit pylône (23, 24, 40) par un premier véhicule accouplé au câble aérien (2) ; et
- accoupler au moins un deuxième véhicule au câble aérien (2) lorsque le franchissement est détecté.

11. Procédé selon la revendication 10, dans lequel l'étape de détection comporte un calcul d'un temps où le premier véhicule franchira ledit pylône (23, 24, 40), et l'étape d'accouplement comporte un accouplement d'au moins un deuxième véhicule au câble aérien (2) lorsque le temps calculé est atteint.

12. Procédé selon la revendication 10 ou 11, dans lequel le câble aérien (2) est entraîné par un moteur (10), l'étape de détection comporte une détermination d'un couple fourni par le moteur (10) et l'étape d'accouplement comporte un accouplement d'au moins un deuxième véhicule au câble aérien (2) lorsqu'une valeur absolue de la vitesse de variation du couple fourni par le moteur est supérieure à un seuil déterminé.

13. Procédé selon la revendication 12, dans lequel le câble aérien (2) est fléchi selon une direction descendante par au moins un pylône de support (23, 40), et l'étape d'accouplement comporte un accouplement d'au moins un deuxième véhicule au câble aérien (2) lorsqu'une vitesse de diminution du couple fourni par le moteur (10) est supérieure au seuil déterminé.

14. Procédé selon la revendication 12 ou 13, dans lequel le câble aérien (2) est fléchi selon une direction ascendante par au moins un pylône de compression (24), et l'étape d'accouplement comporte un accouplement d'au moins un deuxième véhicule au câble aérien (2) lorsqu'une vitesse d'augmentation du couple fourni par le moteur (10) est supérieure au seuil déterminé.

15. Procédé selon l'une des revendications 10 à 14, dans lequel l'étape d'accouplement comporte un accouplement des véhicules (3 à 5) avec une fréquence d'accouplement variable.

16. Procédé selon l'une des revendications 10 à 15, comprenant au moins deux gares (6 à 8) configurées pour accoupler les véhicules (3 à 5) au câble aérien (2), et l'étape d'accouplement comporte un accouplement des véhicules dans au moins une gare (6 à 8) à une fréquence d'accouplement différente de celle d'au moins une autre gare (6 à 8).

## Patentansprüche

1. Luftseiltransportanlage (2), die umfasst:
- mindestens zwei Fahrzeuge (3 bis 5), die jeweils mit einer auskuppelbaren Klemme zum Aus- und Ankuppeln des Fahrzeugs am Luftseil (2) versehen sind;
- mindestens eine Ankuppelvorrichtung (17) zum Kuppeln der Fahrzeuge (3 bis 5) an das Luftseil (2) ; und
- mindestens eine Stütze (23, 24, 40) zum Biegen des Luftseils (2),
**dadurch gekennzeichnet, dass** sie umfasst:
- Mittel zum Erfassen (25-27) eines Überfahrens der genannten Stütze (23, 24, 40) durch ein erstes an das Luftseil (2) gekuppeltes Fahrzeug, wobei die Erfassungsmittel (25-27) so vorgesehen sind, dass sie mindestens ein Ankuppelsignal aussenden, wenn das Überfahren erfasst wird; und
- Steuermittel (28) für die Ankuppelvorrichtung (17), die mit den Erfassungsmitteln (25-27) verbunden und so vorgesehen sind, dass sie beim Empfang des genannten Ankuppelsignals das Ankuppeln mindestens eines zweiten Fahrzeugs an das Luftseil (2) bewirken.

2. Anlage nach Anspruch 1, bei der die Erfassungsmittel (25-27) einen Positionsgeber (25) umfassen, der so konfiguriert ist, dass er das Überfahren der genannten Stütze (23, 24, 40) durch das erste an das Luftseil (2) gekuppelte Fahrzeug erfasst und ein Ankuppelsignal an die Steuermittel (28) schickt, wenn das Überfahren der genannten Stütze (23, 24, 40) erfasst wird.

3. Anlage nach Anspruch 1 oder 2, bei der die Erfassungsmittel (25-27) eine Recheneinheit (27) umfassen, die so vorgesehen ist, dass sie einen Zeitpunkt berechnet, zu dem das erste Fahrzeug die genannte Stütze (23, 24, 40) überfährt, und ein Ankuppelsignal an die Steuermittel (28) sendet, wenn der errechnete Zeitpunkt erreicht ist.

4. Anlage nach Anspruch 1 oder 2, die einen Antriebsmotor (10) für das Luftseil (2) umfasst und bei der die Erfassungsmittel (25-27) ein Modul (26) zur Bestimmung eines vom Antriebsmotor (10) gelieferten Drehmoments und Aussendung eines Ankuppelsignals an die Steuermittel (28) umfassen, wenn ein absoluter Wert der Änderungsgeschwindigkeit des vom Antriebsmotor (10) gelieferten Drehmoments größer ist als ein festgelegter Schwellenwert.

5. Anlage nach Anspruch 4, bei der das Modul (26) Vorrichtungen zum Messen eines von dem Antriebsmotor (10) verbrauchten Stroms umfasst und das vom Antriebsmotor (10) gelieferte Drehmoment ausgehend vom gemessenen Stromverbrauch bestimmt.

6. Anlage nach Anspruch 4, bei der die genannte Stütze eine Trägerstütze (23, 40) zum Biegen des Luftseils (2) in Abwärtsrichtung ist und die Erfassungsmittel (25-27) das Ankuppelsignal an die Steuermittel (28) senden, wenn eine Verringerungsgeschwindigkeit des vom Antriebsmotor (10) gelieferten Drehmoments höher ist als der festgelegte Schwellenwert.

7. Anlage nach Anspruch 3 bis 5, die mindestens eine Druckstütze (24) zum Biegen des Luftseils in Aufwärtsrichtung umfasst und bei der die Erfassungsmittel (25-27) das Ankuppelsignal an die Steuermittel (28) senden, wenn eine Anstiegsgeschwindigkeit des vom Antriebsmotor (10) gelieferten Drehmoments höher ist als der festgelegte Schwellenwert.

8. Anlage nach einem der Ansprüche 1 bis 6, bei der die Steuermittel (28) die genannte Ankuppelvorrichtung (17) so steuern, dass sie die Fahrzeuge (3-5) mit einer variablen Ankuppelfrequenz ankuppelt.

9. Anlage nach einem der Ansprüche 1 bis 7, die mindestens zwei Stationen (6-8) umfasst, die jeweils mit einer Ankuppelvorrichtung (17) für die Fahrzeuge (3-5) an das Luftseil (2) versehen sind, und bei der die Steuermittel (28) die Ankuppelvorrichtung (17) einer Station (6-8) so steuern, dass die Fahrzeuge (3-5) mit einer Ankuppelfrequenz an das Luftseil (2) gekuppelt werden, die von derjenigen der Ankuppelvorrichtung (17) mindestens einer anderen Station (6-8) abweicht.

10. Verfahren zum Transport mittels Luftseil (2) von mindestens zwei Fahrzeugen (3-5), die jeweils mit einer auskuppelbaren Klemme versehen sind, um an das Luftseil (2) an- und von diesem abgekuppelt zu werden, wobei das Luftseil (2) von mindestens einer Stütze (23, 24, 40) gebogen wird, **dadurch gekennzeichnet, dass** es folgende Schritte umfasst:
- Erfassen eines Überfahrens der genannten Stütze (23, 24, 40) durch ein erstes, an das Luftseil (2) gekuppeltes Fahrzeug; und
- Ankuppeln mindestens eines zweiten Fahrzeugs an das Luftseil (2), wenn das Überfahren erfasst wird.

11. Verfahren nach Anspruch 10, bei dem der Erfassungsschritt die Berechnung eines Zeitpunkts einschließt, zu dem das erste Fahrzeug die genannte Stütze (23, 24, 40) überfahren wird, und der Ankuppelschritt das Ankuppeln mindestens eines zweiten Fahrzeugs an das Luftseil (2) umfasst, wenn der berechnete Zeitpunkt erreicht ist.

12. Verfahren nach Anspruch 10 oder 11, bei dem das Luftseil (2) von einem Motor (10) angetrieben wird, der Erfassungsschritt eine Bestimmung eines von dem Motor (10) gelieferten Drehmoments und der Ankuppelschritt ein Ankuppeln mindestens eines zweiten Fahrzeugs an das Luftseil (2) umfasst, wenn ein absoluter Wert der Änderungsgeschwindigkeit des vom Motor gelieferten Drehmoments über einem festgelegten Schwellenwert liegt.

13. Verfahren nach Anspruch 12, bei dem das Luftseil (2) in absteigender Richtung mittels mindestens einer Trägerstütze (23, 40) gebogen wird und der Ankuppelschritt ein Ankuppeln mindestens eines zweiten Fahrzeugs an das Luftseil (2) umfasst, wenn eine Verringerungsgeschwindigkeit des vom Motor (10) gelieferten Drehmoments über dem festgelegten Schwellenwert liegt.

14. Verfahren nach Anspruch 12 oder 13, bei dem das Luftseil (2) in aufsteigender Richtung mittels mindestens einer Druckstütze (24) gebogen wird und der Ankuppelschritt ein Ankuppeln mindestens eines zweiten Fahrzeugs an das Luftseil (2) umfasst, wenn eine Anstiegsgeschwindigkeit des vom Motor (10) gelieferten Drehmoments über dem festgelegten Schwellenwert liegt.

15. Verfahren nach einem der Ansprüche 10 bis 14, bei dem der Ankuppelschritt ein Ankuppeln der Fahrzeuge (3-5) mit variabler Ankuppelfrequenz umfasst.

16. Verfahren nach einem der Ansprüche 10 bis 15, das mindestens zwei Stationen (6-8) umfasst, die so ausgestaltet sind, dass sie die Fahrzeuge (3-5) an das Luftseil (2) kuppeln, und der Ankuppelschritt ein Ankuppeln der Fahrzeuge in mindestens einer Station (6-8) mit einer Ankuppelfrequenz umfasst, die von derjenigen mindestens einer anderen Station (6-8) abweicht.

## Claims

1. A transport installation by aerial cableway (2), comprising:
- at least two vehicles (3 to 5) each provided with a detachable clamp to detach the vehicle from and couple the vehicle to the aerial cableway (2);
- at least one coupling device (17) of the vehicles (3 to 5) to the aerial cableway (2); and
- at least one flexing pillar (23, 24, 40) of the aerial cableway (2),
**characterized in that** it comprises:
- detection means (25 to 27) for detecting passing of a first vehicle coupled to the aerial cableway (2) over said pillar (23, 24, 40), the detection means (25 to 27) being configured to transmit at least one coupling signal when passing is detected; and
- control means (28) of said coupling device (17) connected to the detection means (25 to 27) and configured to command coupling of at least a second vehicle to the aerial cableway (2) on receipt of said coupling signal.

2. The installation according to claim 1, wherein the detection means (25 to 27) comprise a position sensor (25) configured to detect passing of said pillar (23, 24, 40) by the first vehicle coupled to the aerial cableway (2), and to transmit a coupling signal to the control means (28) when passing of said pillar (23, 24, 40) is detected.

3. The installation according to claim 1 or 2, wherein the detection means (25 to 27) comprise a computation unit (27) configured to calculate a time when the first vehicle will pass over said pillar (23, 24, 40) and to transmit a coupling signal to the control means (28) when the calculated time is reached.

4. The installation according to claim 1 or 2, comprising a drive motor (10) of the aerial cableway (2), and wherein the detection means (25 to 27) comprise a module (26) to determine a torque supplied by the drive motor (10) and to transmit a coupling signal to the control means (28) when an absolute value of the rate of variation of the torque supplied by the drive motor (10) is higher than a set threshold.

5. The installation according to claim 4, wherein the module (26) comprises means for measuring a current consumed by the drive motor (10) and determines the torque supplied by the drive motor (10) from the measured consumed current.

6. The installation according to claim 4, wherein said pillar is a support pillar (23, 40) to flex the aerial cableway (2) in a descending direction and the detection means (25 to 27) transmit the coupling signal to the control means (28) when a rate of decrease of the torque supplied by the drive motor (10) is higher than the set threshold.

7. The installation according to claim 3 to 5, comprising at least one compression pillar (24) to flex the rope in an ascending direction, and wherein the detection means (25 to 27) transmit the coupling signal to the control means (28) when a rate of increase of the torque supplied by the drive motor (10) is higher than the set threshold.

8. The installation according to any of claims 1 to 6, wherein the control means (28) command said coupling device (17) to couple the vehicles (3 to 5) with a variable coupling frequency.

9. The installation according to any of claims 1 to 7, comprising at least two stations (6 to 8) each equipped with a coupling device (17) of the vehicles (3 to 5) to the aerial cableway (2), and wherein the control means (28) command the coupling device (17) of a terminal (6 to 8) to couple the vehicles (3 to 5) to the aerial cableway (2) with a different coupling frequency from that of the coupling device (17) of at least one other station (6 to 8).

10. A transport method by aerial cableway (2) of at least two vehicles (3 to 5) each equipped with a detachable clamp to be detached from and coupled to the aerial cableway (2), the aerial cableway (2) being flexed by at least one pillar (23, 24, 40), **characterized in that** it comprises the following steps:
- detecting passing of a first vehicle coupled to the aerial cableway (2) over said pillar (23, 24, 40); and
- coupling at least a second vehicle to the aerial cableway (2) when passing is detected.

11. The method according to claim 10, wherein the detection step comprises calculation of a time when the first vehicle will pass over said pillar (23, 24, 40), and the coupling step comprises coupling of at least a second vehicle to the aerial cableway (2) when the calculated time is reached.

12. The method according to claim 10 or 11, wherein the aerial cableway (2) is driven by a motor (10), the detection step comprises determination of a torque supplied by the motor (10) and the coupling step comprises coupling of at least a second vehicle to the aerial cableway (2) when an absolute value of the rate of variation of the torque supplied by the motor is higher than a set threshold.

13. The method according to claim 12, wherein the aerial cableway (2) is flexed in a descending direction by at least one support pillar (23, 40), and the coupling step comprises coupling of at least a second vehicle to the aerial cableway (2) when a rate of decrease of the torque supplied by the motor (10) is higher than the set threshold.

14. The method according to claim 12 or 13, wherein the aerial cableway (2) is flexed in an ascending direction by at least one compression pillar (24), and the coupling step comprises coupling of at least a second vehicle to the aerial cableway (2) when a rate of increase of the torque supplied by the motor (10) is higher than the set threshold.

15. The method according to any of claims 10 to 14, wherein the coupling step comprises coupling of the vehicles (3 to 5) with a variable coupling frequency.

16. The method according to any of claims 10 to 15, comprising at least two stations (6 to 8) configured to couple the vehicles (3 to 5) to the aerial cableway (2), and the coupling step comprises coupling of the vehicles in at least one station (6 to 8) with a different coupling frequency from that of at least one other station (6 to 8).
